# EUROPEAN PATENT APPLICATION

(11) **EP 3 269 626 A1**
(43) Date of publication of application: **17.01.2018**
(21) Application number: 17181061.7
(22) Date of filing: 12.07.2017
(51) Int. Cl.: B62M 3/08

(54) **MULTIFUNCTIONAL BICYCLE PEDAL**

(30) Priority: 12.07.2016 TW 105210460 U; 16.08.2016 TW 105126136
(71) Applicant: Hsieh, Chin-Long, Taichung City 432 (TW)
(72) Inventor: Hsieh, Chin-Long, Taichung City 432 (TW)
(74) Representative: Cabinet Chaillot

(57) **Abstract**

A multifunctional bicycle pedal contains: a body (10), a plurality of self-lubricating bearings (20), a connection shaft (30), a tapered sleeve (40), and a threaded sleeve (50). The body includes a through hole (11) configured to accommodate the connection shaft. The connection shaft includes a first taper section (32) and a first screwing section (33) fitting with the tapered sleeve and the threaded sleeve. A second taper section (41) of the tapered sleeve mates with the first tapered section of the connection shaft, the threaded sleeve includes a second screwing section (51) screwing with the first screwing section of the connection shaft, and the threaded sleeve pushes the tapered sleeve. The body of fixed size cooperates with the tapered sleeve of fixed size, multiple connection shafts of various sizes, and multiple threaded sleeves of various sizes so as to adjust a span of the multifunctional bicycle pedal, and the connection shaft is in connection with the body.

## Description

### FIELD OF THE INVENTION

The present invention relates to a multifunctional bicycle pedal which is assembled easily and randomly.

### BACKGROUND OF THE INVENTION

A conventional bicycle pedal is coupled with a connection shaft, wherein the connection shaft does not pass through the bicycle pedal and is locked with a crank, hence two planes are arranged on a large-diameter position of the connection shaft, and the two planes are rotated by a hand tool to lock with a crank.

However, the large-diameter position of the connection shaft is adjacent to the crank, so an operation space to the hand tool is narrow. Furthermore, a span between two bicycle pedals is fixed and cannot be adjusted based on using requirements.

The present invention has arisen to mitigate and/or obviate the afore-described disadvantages.

### SUMMARY OF THE INVENTION

The primary objective of the present invention is to provide a multifunctional bicycle pedal which is assembled easily and randomly.

Another objective of the present invention is to provide a multifunctional bicycle pedal which is applicable for various types of bicycles.

To obtain above-mentioned objective, a multifunctional bicycle pedal provided by the present invention contains: a body, , a connection shaft, a tapered sleeve, and a threaded sleeve.

The body includes a through hole passing through the body so as to accommodate a connection shaft.

The connection shaft includes a first taper section and a first screwing section which are formed on a first end of the connection shaft so as to fit with a tapered sleeve and a threaded sleeve.

A second taper section of the tapered sleeve mates with the first tapered section of the connection shaft.

The threaded sleeve includes a second screwing section arranged on an inner wall thereof so as to screw with the first screwing section of the connection shaft, and the threaded sleeve pushing the tapered sleeve.

The body of fixed size cooperates with the tapered sleeve of fixed size, multiple connection shafts of various sizes, and multiple threaded sleeves of various sizes so as to adjust a span of the multifunctional bicycle pedal, and the connection shaft is in connection with the body, hence degree of freedom of the body is maintained, and the body is not locked.

When the tapered sleeve reaches a locking point, it faces to a first side face of the body and keeps a gap from an adjacent face of the body, such that the body is not locked by way of the gap, the body keeps its degree of freedom, a freed end of the body is coupled with an orifice of the connection shaft, and the connection shaft is locked with a crank of a bicycle.

According to the invention, there is also disclosed a multifunctional bicycle pedal comprising:
a body including a through hole passing through the body so as to accommodate a connection shaft;
the connection shaft including a first taper section and a first screwing section which are formed on a first end of the connection shaft so as to fit with an adjustable sleeve, a tapered sleeve, and a threaded sleeve;
a second taper section of the tapered sleeve mating with the first tapered section of the connection shaft;
the threaded sleeve including a second screwing section arranged on an inner wall thereof so as to screw with the first screwing section of the connection shaft, and the threaded sleeve pushing the tapered sleeve;
wherein the body of fixed size cooperates with the tapered sleeve of fixed size, multiple connection shafts of various sizes, multiple threaded sleeves of various sizes, and multiple adjustable sleeves of various sizes so as to adjust a span of the multifunctional bicycle pedal, and the connection shaft is connected with the body, hence degree of freedom of the body is maintained, and the body not locked;
when the tapered sleeve reaches a locking point, it faces to a first side face of the body and keeps a gap from an adjacent face of the body, such that the body is not locked by way of the gap, and the body keeps its degree of freedom, a freed end of the body is coupled with an orifice of the connection shaft, and the connection shaft is locked with a crank of a bicycle.

### BRIEF DESCRIPTION OF THE DRAWINGS

FIG. 1 is a perspective view showing the assembly of a multifunctional bicycle pedal according to a first embodiment of the present invention.
FIG. 2 is a perspective view showing the exploded components of the multifunctional bicycle pedal according to the first embodiment of the present invention.
FIG. 3A to 3D are a cross sectional view showing an operation of a threaded sleeve and a connection shaft of the multifunctional bicycle pedal according to the first embodiment of the present invention.
FIG. 4A to 4D are a cross sectional view showing another operation of the threaded sleeve and the connection shaft of the multifunctional bicycle pedal according to the first embodiment of the present invention.
FIG. 5 is an amplified cross sectional view of a part 5 of FIG. 3A.
FIG. 6 is an amplified cross sectional view of a part 6 of FIG. 4D.
FIG. 7 is a perspective view showing the application of the multifunctional bicycle pedal according to the present invention.
FIG. 8 is a perspective view showing the exploded components of an application of a multifunctional bicycle pedal according to a second embodiment of the present invention.
FIG. 9 is a perspective view showing the exploded components of another application of the multifunctional bicycle pedal according to the second embodiment of the present invention.
FIG. 10 is a perspective view showing the assembly of another application of the multifunctional bicycle pedal according to the second embodiment of the present invention.
FIG 11 is a perspective view showing the exploded components of another application of the multifunctional bicycle pedal according to the second embodiment of the present invention.
FIG. 12 is a perspective view showing the exploded components of another application of the multifunctional bicycle pedal according to the second embodiment of the present invention.
FIG. 13 is a perspective view showing the assembly of another application of the multifunctional bicycle pedal according to the second embodiment of the present invention.
FIG. 14 is a side plan view showing the application of the multifunctional bicycle pedal according to the present invention.

### DETAILED DESCRIPTION OF THE PREFERRED EMBODIMENTS

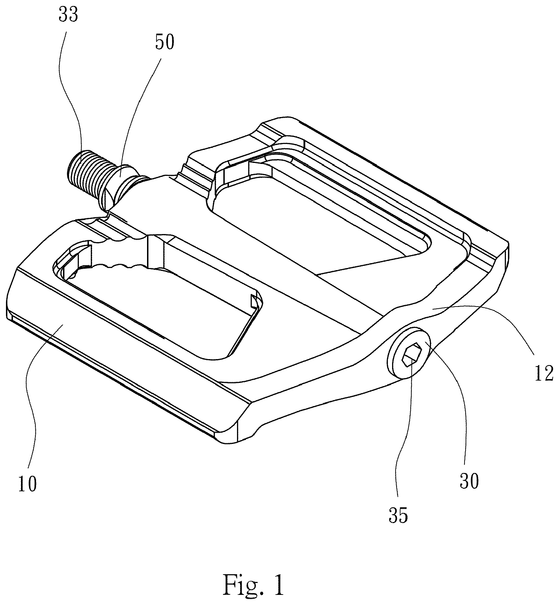

With reference to FIGS. 1-3D, 5, and 7, a multifunctional bicycle pedal according to a first embodiment of the present invention comprises: a body 10, a plurality of self-lubricating bearings 20, a connection shaft 30, a tapered sleeve 40, and a threaded sleeve 50.

The body 10 includes a through hole 11 passing through the body 10 so as to accommodate the plurality of self-lubricating bearings 20, a first washer 31, and the connection shaft 30.

The connection shaft 30 includes a first taper section 32 and a first screwing section 33 which are formed on a first end of the connection shaft 30 so as to fit with a second washer 34, the tapered sleeve 40, and the threaded sleeve 50.

A second taper section 41 of the tapered sleeve 40 mates with the first tapered section 32 of the connection shaft 30.

The threaded sleeve 50 includes a second screwing section 51 arranged on an inner wall thereof so as to screw with the first screwing section 33 of the connection shaft 30, wherein the threaded sleeve 50 pushes the tapered sleeve 40.

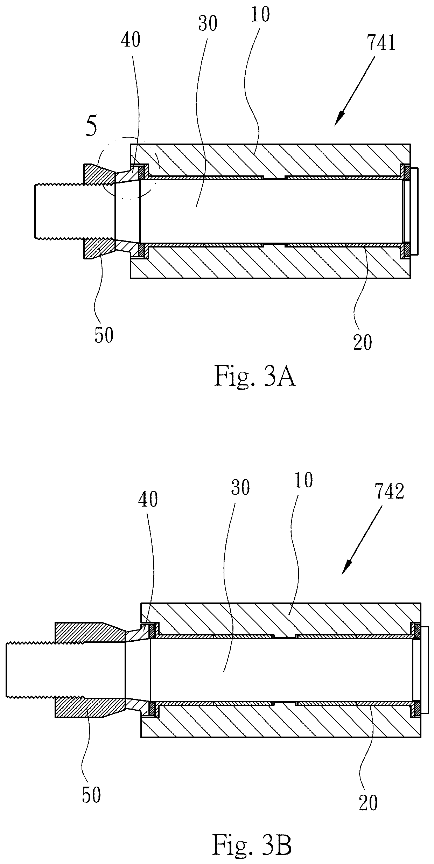

Thereby, the body 10 of fixed size cooperates with the tapered sleeve 40 of fixed size, multiple connection shafts 30 of various sizes, and multiple threaded sleeves 50 of various sizes so as to adjust a span of the multifunctional bicycle pedal (as shown in FIGS. 3A to 3D), and the connection shaft 30 is in connection with the body 10, hence degree of freedom of the body 10 is maintained, and the body 10 is not locked.

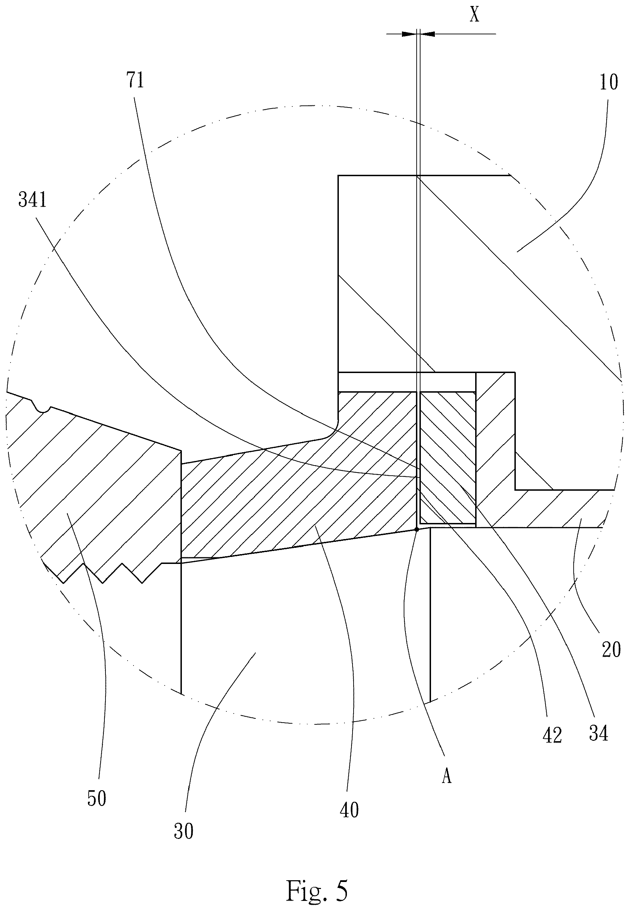

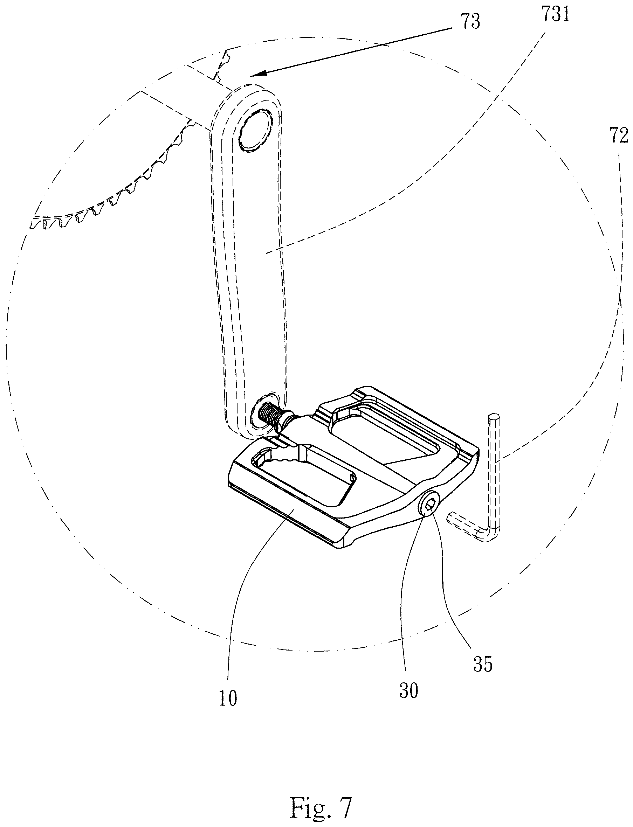

In operation, when the tapered sleeve 40 reaches a locking point A, it faces to a first side face 42 of the body 10 and keeps a gap X from an adjacent face 71 of the body 10, such that the body 10 is not locked by way of the gap X, and the body 10 keeps its degree of freedom, as illustrated in FIG. 5. A freed end 12 of the body 10 is coupled with an orifice 35 of the connection shaft 30, the connection shaft 30 is locked with a crank 821 of a bicycle 82, and a space beside the free end 12 of the body 10 is wide so that a hand tool 81 operates easily and randomly, as shown in FIG. 7.

Between the body 10 and the tapered sleeve 40 is defined the second washer 34, and the adjacent face 71 is a second side face 341 of the second washer 34.

The adjacent face 71 is a peripheral face of each of the plurality of self-lubricating bearings 20.

Referring to FIGS. 3A to 3D, the multiple connection shafts 30 of the various sizes includes a short connection shaft, a medium connection shaft, a long connection shaft, and a longest connection shaft, wherein the body 10 and the tapered sleeve 40 are in a fixed size.

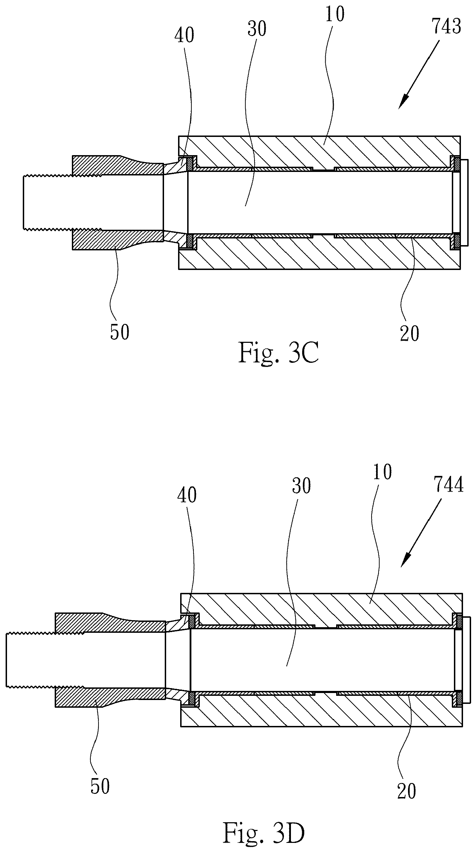

The multiple threaded sleeves 50 of the various sizes includes a short threaded sleeve, a medium threaded sleeve, a long threaded sleeve, and a longest threaded sleeve, wherein the threaded sleeve 50 is connected with a short-span part 741, as shown in FIG. 3A. The threaded sleeve 50 is connected with a medium-span part 742, as illustrated in FIG. 3B. The threaded sleeve 50 is coupled with a long-span part 743, as shown in FIG. 3C. The threaded sleeve 50 is coupled with a longest-span part 744, as shown in FIG. 3D.

With reference to FIGS. 1, 2, 4A-4D, 6, and 7, the multifunctional bicycle pedal of the first embodiment of the present invention comprises: a body 10, a plurality of self-lubricating bearings 20, a connection shaft 30, a tapered sleeve 40, a threaded sleeve 50, and an adjustable sleeve 60.

The body 10 includes a through hole 11 passing through the body 10 so as to accommodate the plurality of self-lubricating bearings 20, a first washer 31, and the connection shaft 30.

The connection shaft 30 includes a first taper section 32 and a first screwing section 33 which are formed on a first end of the connection shaft 30, wherein a second washer 34, the adjustable sleeve 60, the tapered sleeve 40, and the threaded sleeve 50 are fitted with the first end of the connection shaft 30.

A second taper section 41 of the tapered sleeve 40 mates with the first tapered section 32 of the connection shaft 30.

The threaded sleeve 50 includes a second screwing section 51 arranged on an inner wall thereof so as to screw with the first screwing section 33 of the connection shaft 30, wherein the threaded sleeve 50 pushes the tapered sleeve 40.

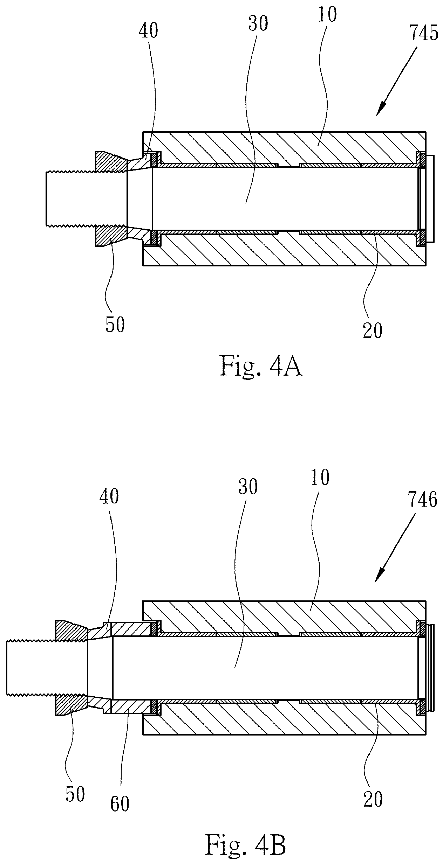

Thereby, the body 10 of fixed size cooperates with the tapered sleeve 40 of fixed size, multiple connection shafts 30 of various sizes, multiple threaded sleeves 50 of various sizes, and multiple adjustable sleeves 60 of various sizes so as to adjust a span of the multifunctional bicycle pedal (as shown in FIGS. 4A to 4D), and the connection shaft 30 is connected with the body 10, hence degree of freedom of the body 10 is maintained, and the body 10 not locked.

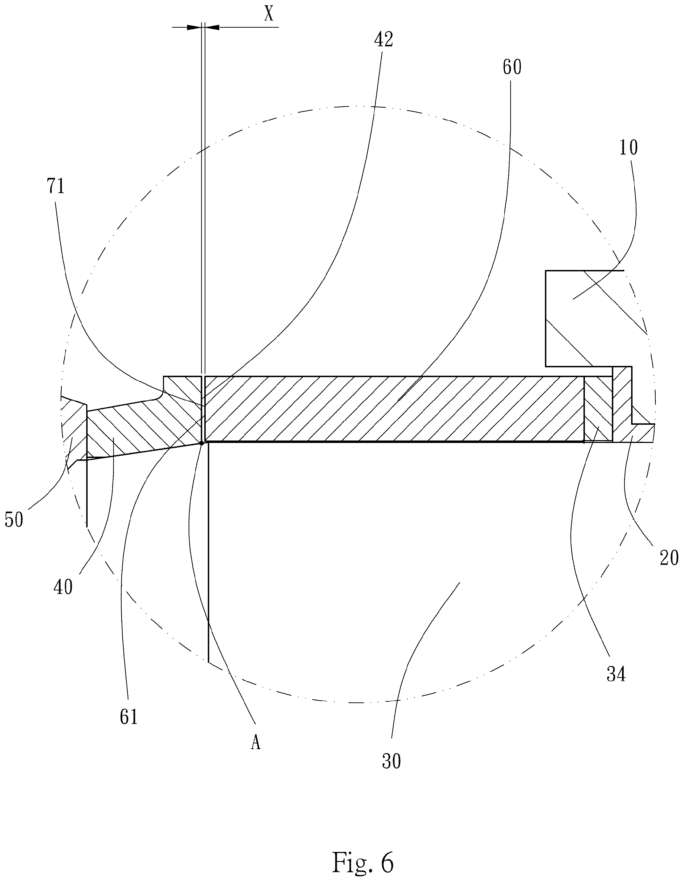

In operation, when the tapered sleeve 40 reaches a locking point A, it faces to a first side face 42 of the body 10 and keeps a gap X from an adjacent face 71 of the body 10, such that the body 10 is not locked by way of the gap X, and the body 10 keeps its degree of freedom, as illustrated in FIG. 6. A freed end 12 of the body 10 is coupled with an orifice 35 of the connection shaft 30, the connection shaft 30 is locked with a crank 731 of a bicycle 73, and a space beside the free end 12 of the body 10 is wide so that a hand tool 72 operates easily and randomly, as shown in FIG 7.

Between the body 10 and the tapered sleeve 40 is defined a second washer 34, and the adjacent face 71 is a second side face 341 of the second washer 34.

The adjacent face 71 is a third side face 61 of each of the multiple adjustable sleeves 60.

Referring to FIGS. 4A to 4D, the multiple connection shafts 30 of the various sizes includes a short connection shaft, a medium connection shaft, a long connection shaft, and a longest connection shaft, wherein the body 10, the threaded sleeve 50, and the tapered sleeve 40 are in a fixed size.

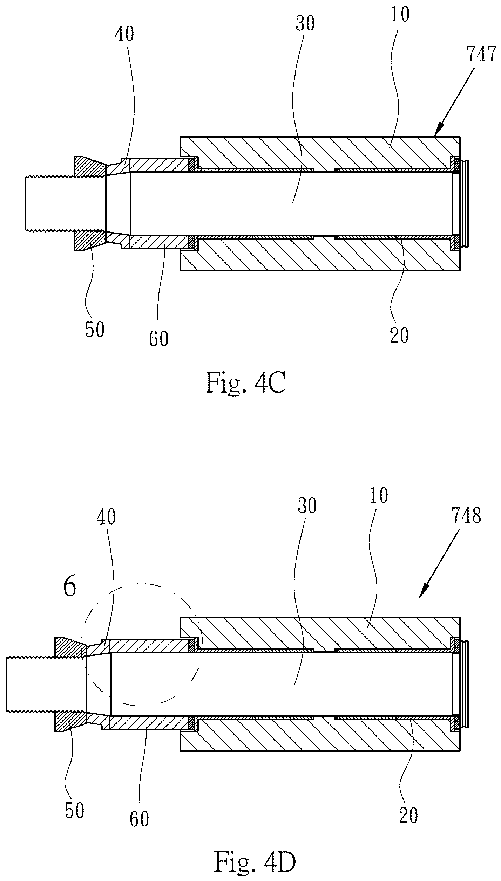

The multiple adjustable sleeves 60 of the various sizes includes a medium adjustable sleeve, a long adjustable sleeve, and a longest adjustable sleeve, wherein the adjustable sleeve 60 is not connected with a short-span part 745, as shown in FIG. 4A. The adjustable sleeve 60 is connected with a medium-span part 746, as shown in FIG. 4B. The adjustable sleeve 60 is in connection with a long-span part 747, as illustrated in FIG. 4C. The adjustable sleeve 60 is coupled with a longest-span part 748, as shown in FIG. 4D.

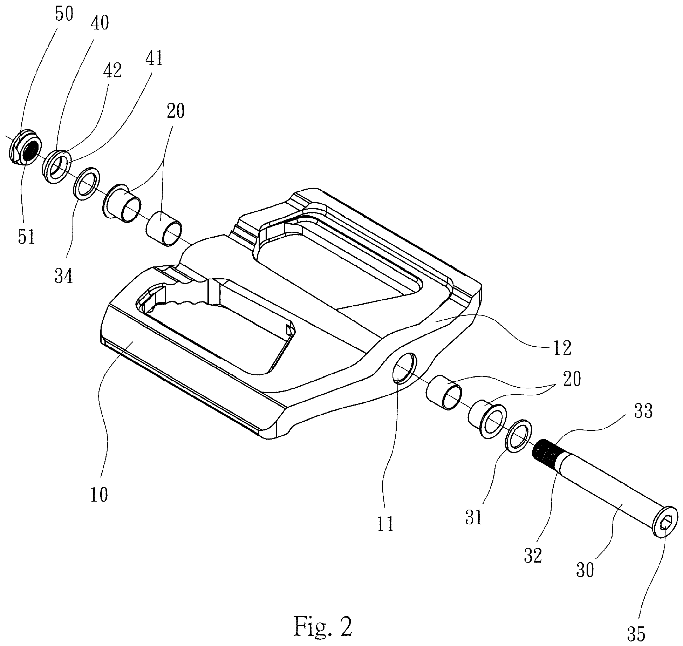

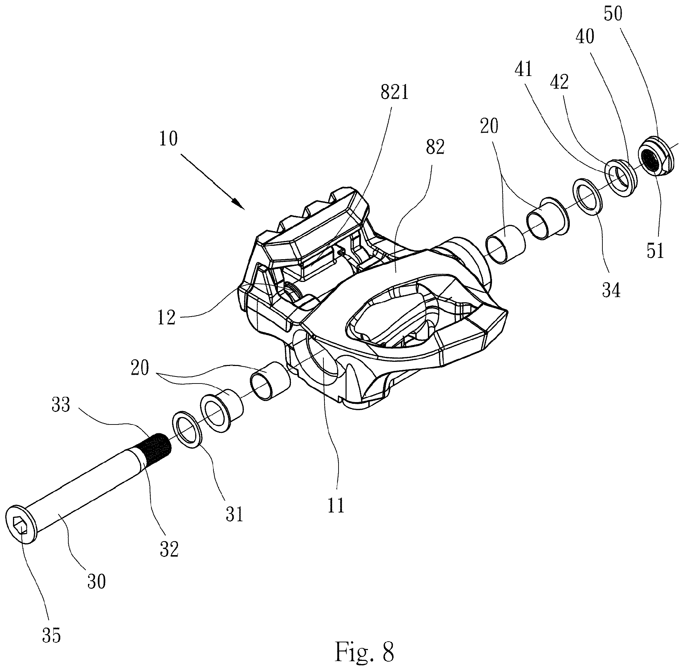

Referring to FIGS. 1 and 2, the body 10 is embodied as a general bicycle pedal, wherein the general bicycle pedal has two surfaces which are stepped by rider's foot. As illustrated in FIG. 8, the body 10 mates with a pedal assembly 821 of a racing pedal 82 of a racing bicycle, wherein the body 10 is fastened with the pedal assembly 821 of the racing pedal 82.

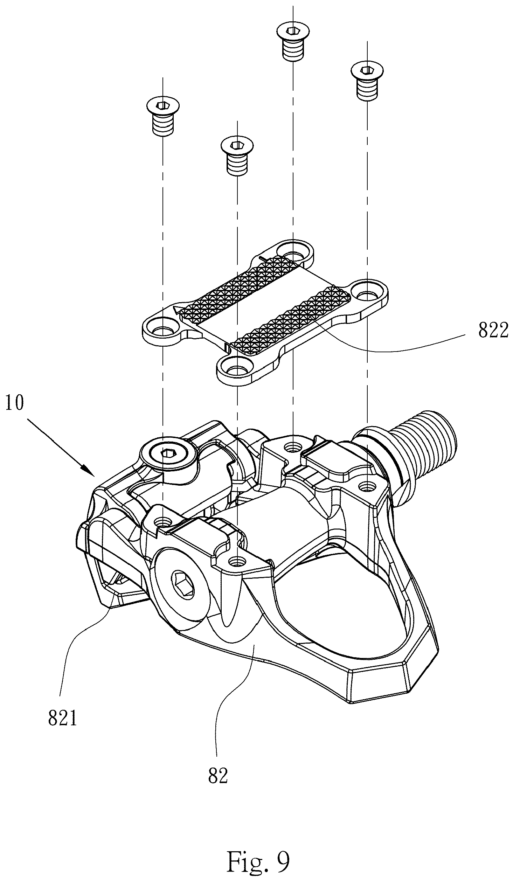

With reference to FIGS. 8 and 9, the body 10 is embodied as a racing pedal 82, and the racing pedal 82 includes a racing pedal assembly 821 arranged on a first surface thereof and includes a flat sheet 822 arranged on a second surface of the racing pedal 82, hence the first surface of the racing pedal 82 is locked on a fastener of a sole of the rider's shoe and is used as the racing pedal 82, and the second surface of the racing pedal 82 is locked with the flat sheet 822 and is used as the general bicycle pedal.

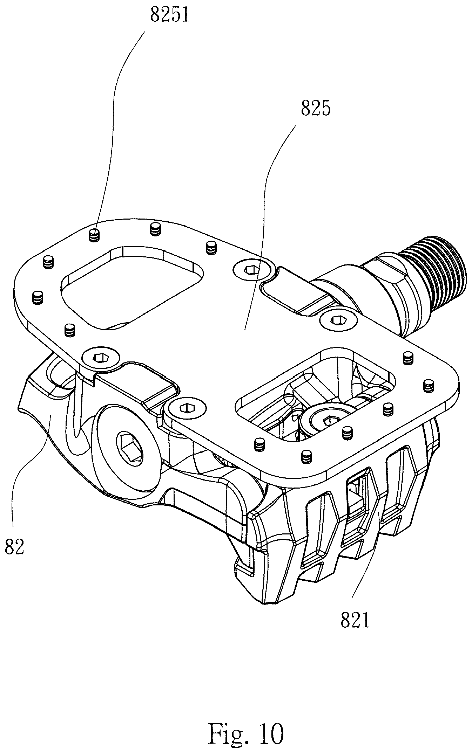

With reference to FIG. 10, the body 10 is embodied as includes a racing pedal 82, and the racing pedal 82 includes a racing pedal assembly 821 arranged on a first surface thereof and includes a flat sheet 825 arranged on a second surface of the racing pedal 82, wherein the flat sheet 825 has multiple spikes 8251 arranged thereon, hence the first surface of the racing pedal 82 is locked on a fastener of a sole of the rider's shoe and is used as the racing pedal 82, and the second surface of the racing pedal 82 is locked with the flat sheet 825 and is used as the general pedal.

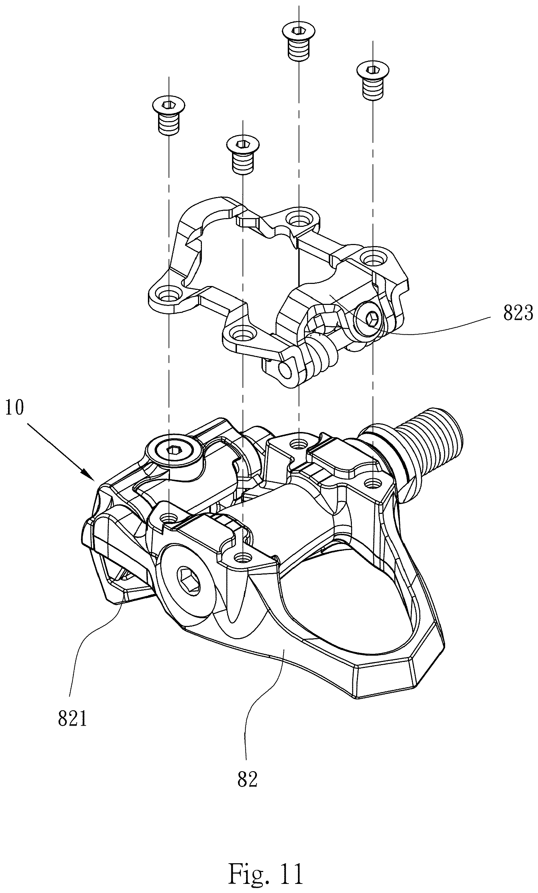

With reference to FIG. 11, the body 10 is embodied as the racing pedal 82, the racing pedal 82 includes a racing pedal assembly 821 arranged on a first surface thereof and includes a cyclo-cross pedal assembly 823 arranged on a second surface of the racing pedal 82, hence the first surface of the racing pedal 82 is locked on a first fastener of a sole of the rider's shoe and is used as the racing pedal 82, and the second surface of the racing pedal 82 is locked with cyclo-cross pedal assembly 823 and is locked on a second fastener of the sole of the rider's shoe.

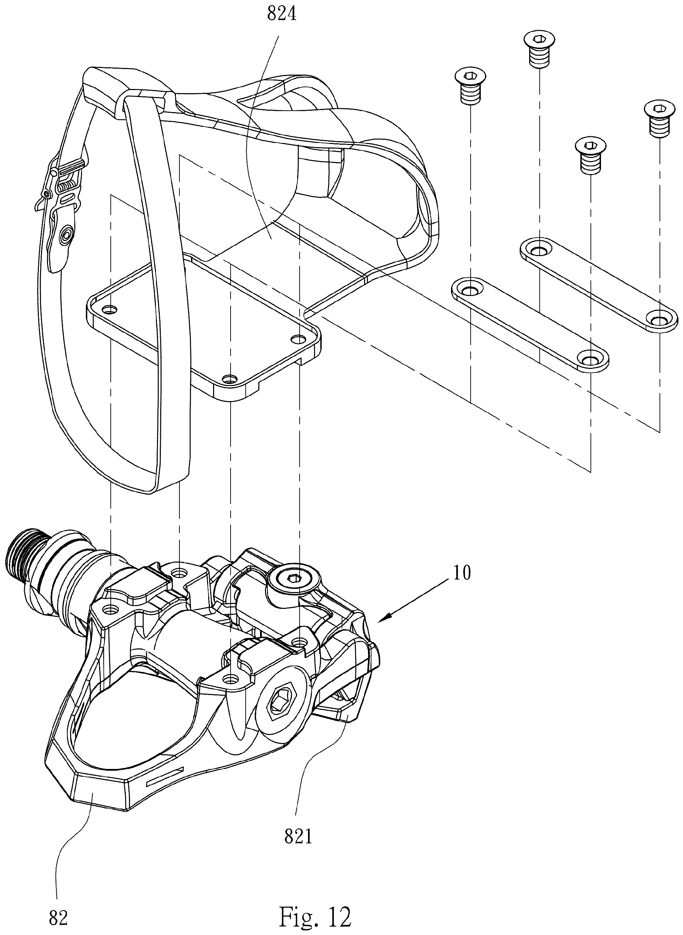

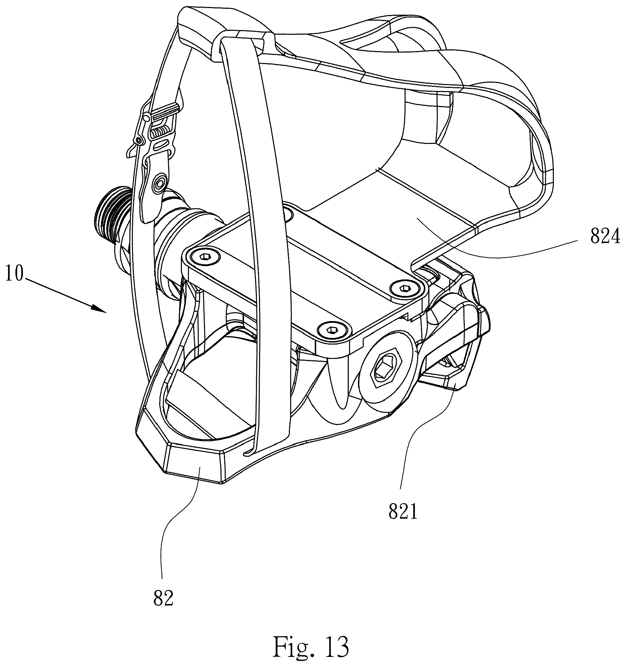

Referring to FIGS. 12 and 13, the body 10 is embodied as the racing pedal 82, the racing pedal 82 includes a racing pedal assembly 821 arranged on a first surface thereof and includes a fitting assembly 824 arranged on a second surface of the racing pedal 82, hence the first surface of the racing pedal 82 is used as the racing pedal 82 and locked on a fastener of a sole of the rider's shoe, and the second surface of the racing pedal 82 is locked with the fitting assembly 824 and fits with a rider's shoe sleeve.

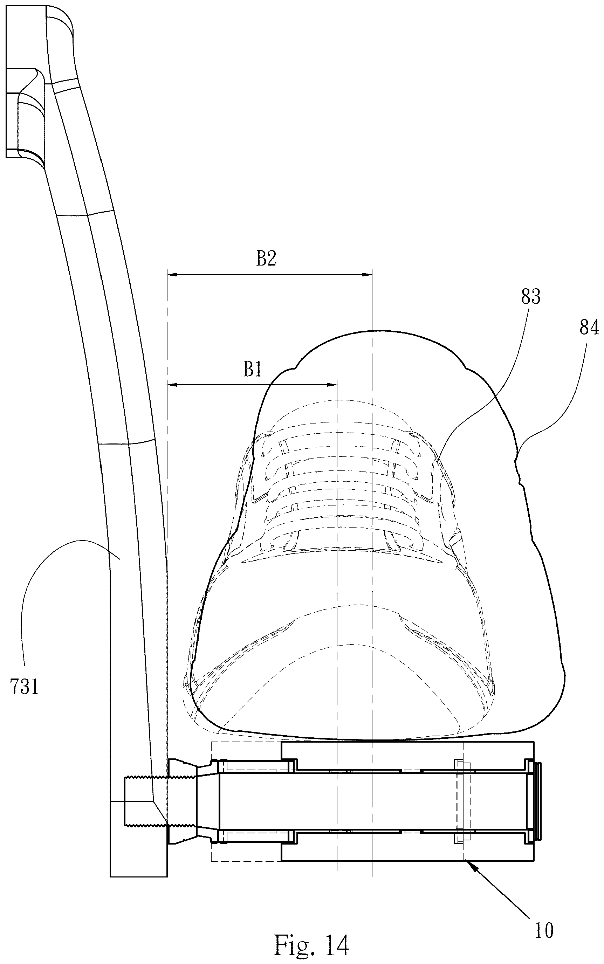

As illustrated in FIG. 14, two shoes are in different sizes based on using requirements, for example, a large-size shoe 84 has a large span B2, and a small-size shoe 83 has a small span B1, hence when using the racing pedal assembly 821 or the cyclo-cross pedal assembly 823 and a locking position of the fastener is fixed, the small span B1 mates with the small-size shoe 84, the large-size shoe 84 contacts a crank 731, and the fastener does not lock with the racing pedal assembly 821 or the cyclo-cross pedal assembly 823.

Accordingly, the span of the multifunctional bicycle pedal is adjustable so as to maintain the degree of freedom of the body, and the body is not locked. Preferably, the space beside the free end of the body is wide so that the hand tool operates easily and randomly.

While the preferred embodiments of the invention have been set forth for the purpose of disclosure, modifications of the disclosed embodiments of the invention as well as other embodiments thereof may occur to those skilled in the art. Accordingly, the appended claims are intended to cover all embodiments which do not depart from the spirit and scope of the invention.

## Claims

1. A multifunctional bicycle pedal comprising:
a body (10) including a through hole (11) passing through the body (10) so as to accommodate a connection shaft (30);
the connection shaft (30) including a first taper section (32) and a first screwing section (33) which are formed on a first end of the connection shaft (30) so as to fit with a tapered sleeve (40) and a threaded sleeve (50);
a second taper section (41) of the tapered sleeve (40) mating with the first tapered section of the connection shaft (30);
the threaded sleeve (50) including a second screwing section (51) arranged on an inner wall thereof so as to screw with the first screwing section (33) of the connection shaft (30), and the threaded sleeve (50) pushing the tapered sleeve (40);
wherein the body (10) of fixed size cooperates with the tapered sleeve (40) of fixed size, multiple connection shafts (30) of various sizes, and multiple threaded sleeves (50) of various sizes so as to adjust a span of the multifunctional bicycle pedal, and the connection shaft (30) is in connection with the body (10), hence degree of freedom of the body (10) is maintained, and the body (10) is not locked;
wherein when the tapered sleeve (40) reaches a locking point (A), it faces to a first side face (42) of the body (10) and keeps a gap (X) from an adjacent face (71) of the body (10), such that the body (10) is not locked by way of the gap (X), the body (10) keeps its degree of freedom, a freed end of the body (10) is coupled with an orifice (35) of the connection shaft (30), and the connection shaft (30) is locked with a crank (731) of a bicycle (73).

2. The multifunctional bicycle pedal as claimed in claim 1, wherein the first taper section (32) and the first screwing section (33) of the connection shaft are also formed on the first end of the connection shaft (30) so as to fit with an adjustable sleeve, the body (10) also cooperating with multiple adjustable sleeves (60) of various sizes.

3. The multifunctional bicycle pedal as claimed in claim 1 or claim 2, wherein the through hole (11) also accommodates a plurality of self-lubricating bearings (20).

4. The multifunctional bicycle pedal as claimed in claim 1 or claim 2, wherein the through hole (11) houses a first washer (31), before accommodating the connection shaft (30).

5. The multifunctional bicycle pedal as claimed in claim 1 or claim 2, wherein between the body (10) and the tapered sleeve (40) is defined a second washer (34).

6. The multifunctional bicycle pedal as claimed in claim 5, wherein the adjacent face (71) is a second side face (341) of the second washer (34).

7. The multifunctional bicycle pedal as claimed in claim 1 or claim 2, wherein the adjacent face (71) is a peripheral face of each of the plurality of self-lubricating bearings (20).

8. The multifunctional bicycle pedal as claimed in claim 1 or claim 2, wherein the body (10) is a general pedal or a racing pedal (82) which has a racing pedal assembly (821).

9. The multifunctional bicycle pedal as claimed in claim 1 or claim 2, wherein the body (10) is a racing pedal (82), and the racing pedal (82) includes a racing pedal assembly (821) arranged on a first surface thereof and includes a flat sheet (822) arranged on a second surface of the racing pedal (82).

10. The multifunctional bicycle pedal as claimed in claim 1 or claim 2, wherein the body (10) is a racing pedal (82), and the racing pedal (82) includes a racing pedal assembly (821) arranged on a first surface thereof and includes a cyclo-cross pedal assembly (823) arranged on a second surface of the racing pedal (82).

11. The multifunctional bicycle pedal as claimed in claim 1 or claim 2, wherein the body (10) is a racing pedal (82), and the racing pedal (82) includes a racing pedal assembly (821) arranged on a first surface thereof and includes a fitting assembly (824) arranged on a second surface of the racing pedal (82).
